# FASCICULE DE BREVET EUROPEEN

(11) **EP 3 669 964 B1**
(45) Date de publication et mention de la délivrance du brevet: **06.01.2021**
(21) Numéro de dépôt: 19217375.5
(22) Date de dépôt: 18.12.2019
(51) Int. Cl.: B01D 45/14, B01D 50/00, B04B 5/00, F01M 13/04, F01M 1/10

(54) **DISPOSITIF DE SÉPARATION D'UN MÉLANGE AIR/HUILE**
VORRICHTUNG ZUM TRENNEN EINES LUFT-ÖL-GEMISCHES
DEVICE FOR SEPARATING A MIX OF AIR/OIL

(30) Priorité: 19.12.2018 FR 1873420
(43) Date de publication de la demande: 24.06.2020
(73) Titulaire: Safran Transmission Systems, 92700 Colombes (FR)
(72) Inventeur: GUILLEMONT, Maxence, Gérard, Claude, 77550 MOISSY-CRAMAYEL (FR); BECQUERELLE, Samuel, Raymond, Germain, 77550 MOISSY-CRAMAYEL (FR)
(74) Mandataire: Ernest Gutmann - Yves Plasseraud S.A.S.

(56) Documents cités:
- CN-A- 106 917 655
- US-A- 6 017 300
- US-A1- 2004 214 710
- US-A1- 2013 056 407
- US-A1- 2013 319 240

## Description

### Domaine technique de l'invention

L'invention concerne un dispositif de séparation d'un mélange air/huile ainsi qu'un boîtier d'accessoires pour une turbomachine.

### Etat de la technique antérieure

Un boitier d'accessoires constitue un équipement servant à supporter et à entraîner mécaniquement d'autres équipements appelés les accessoires, tels que des générateurs électriques, des pompes à huile ou à carburant, ou autres, nécessaires au fonctionnement de la turbomachine ou de l'aéronef sur lequel la turbomachine est montée. Afin d'assurer cet entraînement, on prélève la puissance requise sur un arbre principal de la turbomachine, généralement grâce à un arbre de renvoi radial engrené avec l'arbre principal, pour transmettre mécaniquement cette puissance au boitier d'accessoires.

Le boîtier d'accessoires comporte classiquement un carter fixe, dans lequel sont logés des engrenages servant à distribuer la puissance aux différents accessoires.

Le boîtier d'accessoires peut par ailleurs être associé à un dispositif de séparation d'un mélange air/huile, également appelé déshuileur, comme cela est connu du document FR 3 064 305 au nom de la Demanderesse.

Pour ce faire, de l'air est prélevé directement dans la veine d'air de la turbomachine. Cet air transite ensuite dans la turbomachine, puis est évacué vers l'extérieur de la turbomachine pour limiter la montée en pression des autres zones de la turbomachine. Cet air ayant transité par différentes zones de la turbomachine est chargé en huile utilisée pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dispositifs permettant de séparer l'huile de l'air avant d'évacuer l'air vers l'extérieur de la turbomachine US2013056407 A1, CN106917655 A, US2004214710 A1, US6017300 A et US2013319240 A1 divulguent des dispositifs de séparation d'un mélange air/huile.

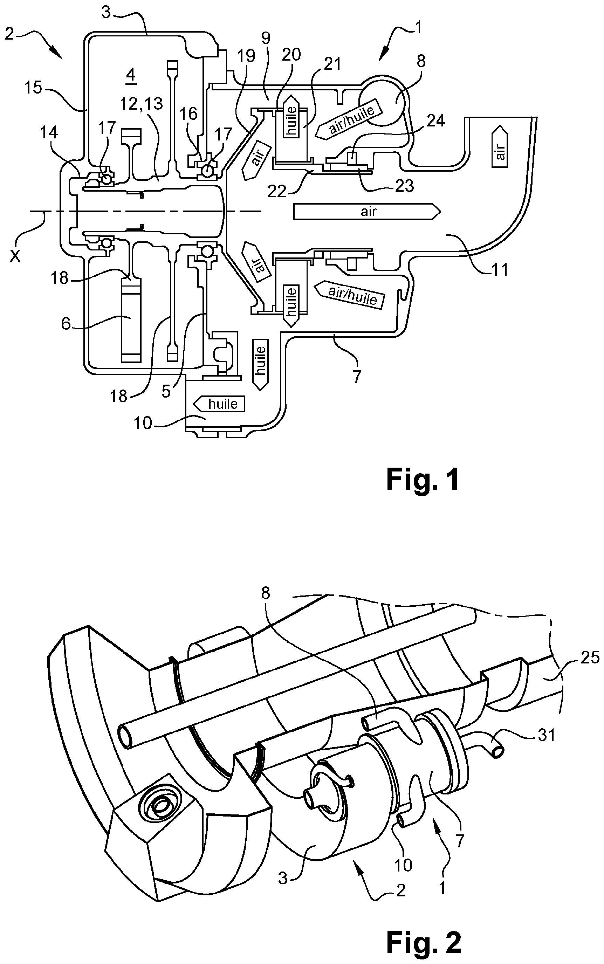

La figure 1 illustre un tel dispositif 1 équipant un boîtier d'accessoires 2. Le boîtier d'accessoires 2 comporte un carter creux 3 délimitant un volume interne 4, refermé par un couvercle 5, et contenant un ensemble d'engrenages 6 formés par des pignons ou roues dentées, destinés à distribuer la puissance prélevée sur l'arbre de la turbomachine jusqu'aux différents équipements de la turbomachine. Le boîtier d'accessoires 2 comporte un carter fixe 7, solidaire du couvercle 5, ledit carter 7 délimitant une entrée 8 de mélange huile/air en partie haute, une enceinte de réception d'huile annulaire 9 comportant une sortie d'huile 10 en partie basse, et une conduite ou un canal central de circulation d'air 11.

Le dispositif 1 comporte en outre un arbre tournant 12 d'axe X, comportant une partie avant (première partie) creuse 13 montée pivotante dans un logement 14 d'une cloison radiale avant 15 du carter 3 et dans une ouverture centrale 16 du couvercle 5, par l'intermédiaire de paliers à roulement 17. La partie avant 13 de l'arbre 12 comporte en outre des pignons dentés 18, venant ici de matière avec la partie avant 13 de l'arbre 12, engrenant avec les pignons 6 du boîtier d'accessoires 2, de sorte à entraîner l'arbre 12 en rotation.

Les termes axial et radial sont définis par rapport à l'axe X.

Ledit arbre 12 comporte en outre une partie arrière 19 (seconde partie opposée à la première partie vis-à-vis de l'axe X) creuse, s'évasant vers l'arrière et comportant une partie annulaire interne 22. L'extrémité arrière de la partie 19 est couplée en rotation, par exemple par soudage, à une cassette 20 supportant des éléments filtrants 21. En fonctionnement, la rotation de l'arbre de la turbomachine entraîne la rotation de l'arbre 12, de la partie 19 et de la cassette 20 comportant les éléments filtrants 21, autour de l'axe X, par rapport au carter 7, au carter 3 et au couvercle 5.

Un mélange d'air et d'huile est amenée dans le carter 7 par l'entrée 8, puis traverse les éléments filtrants 21 où l'huile est séparée de l'air et est extraite radialement vers l'extérieur par effet centrifuge, avant de déboucher dans l'enceinte de réception d'huile 9 où elle est évacuée en partie basse par la sortie 10.

L'air filtré ayant traversé les éléments filtrants 21 traverse le volume interne de la partie arrière creuse 19 de l'arbre 12, et pénètre dans le canal de circulation d'air 11 avant d'être évacué à l'extérieur.

Il existe actuellement un besoin de récupérer un maximum d'énergie afin d'améliorer le rendement de la turbomachine.

L'invention vise à proposer une solution à ce besoin, de façon simple, peu onéreuse et fiable.

### Résumé de l'invention

A cet effet, l'invention propose d'un flux issu d'un mélange air/huile comportant une entrée de flux, une enceinte de réception d'huile, une conduite de circulation d'air, au moins un élément filtrant couplé en rotation à un arbre d'entraînement en rotation d'axe longitudinal, le dispositif de séparation (étant conçu de façon à ce que le flux issu de l'entrée de flux précitée débouche dans l'enceinte (et soit entrainé au travers de l'élément filtrant entraîné en rotation, de sorte que l'huile contenue dans le flux soit centrifugée radialement à l'extérieur de l'élément filtrant et amenée dans l'enceinte de réception d'huile, le flux filtré débouchant dans la conduite de circulation d'air, caractérisé en ce que l'arbre d'entraînement en rotation est couplé à une turbine apte à être entraînée en rotation par au moins une partie du flux filtré, la turbine comprenant une sortie d'air qui débouche vers l'extérieur.

La turbine entraîne ainsi l'arbre d'entraînement en rotation ainsi que l'élément filtrant, indépendamment du régime de la turbomachine. En effet, la vitesse de rotation de la turbine, et donc l'efficacité de la filtration, est dépendante du débit d'air filtré, et donc des besoins de filtration. En particulier, la vitesse de rotation de l'arbre d'entraînement est indépendante mécaniquement de la chaîne cinématique du support d'équipement du boîtier d'accessoires, et est donc indépendante de la vitesse de rotation d'un arbre de la turbomachine.

Une telle structure permet d'améliorer l'efficacité de la séparation de l'huile et de l'air. On rappelle que le débit volumique d'air à traiter n'est pas uniquement dépendant du régime de fonctionnement de la turbomachine, mais est également dépendant de la pression de l'air, et donc de l'altitude.

Les termes axial et radial sont définis par rapport à l'axe de l'arbre d'entraînement en rotation. L'air issu de la turbine peut être rejeté dans l'atmosphère.

La turbine peut comporter une entrée d'air, la conduite de circulation d'air comportant une sortie d'air, une canalisation reliant la conduite de circulation d'air à l'entrée d'air de la turbine de façon à diriger le flux filtré à l'entrée d'air de la turbine.

La turbine peut être une turbine radiale, l'entrée d'air de la turbine s'étendant radialement, la sortie d'air de la turbine s'étendant selon l'axe.

Le dispositif peut comporter un carter fixe, délimitant l'entrée du flux et l'enceinte de réception d'huile, ledit carter délimitant également la conduite de circulation d'air, l'arbre d'entraînement en rotation comportant une première partie pourvue d'une extrémité libre couplée en rotation à un rotor de la turbine, et une seconde partie opposée à la première partie vis-à-vis de l'axe, la seconde partie étant creuse et supportant l'élément filtrant au niveau de sa périphérie radialement externe.

Un élément de support creux peut être monté pivotant par rapport au carter, au niveau de la conduite de circulation d'air, ledit élément de support supportant l'élément filtrant au niveau de sa périphérie radialement interne.

Le carter fixe peut comporter une sortie d'huile située dans une partie inférieure de l'enceinte de réception d'huile.

L'air filtré au travers de l'élément filtrant est ainsi apte à déboucher dans le volume interne de la seconde partie creuse de l'arbre puis est dirigé vers la conduite de circulation d'air au travers de l'élément de support creux.

Par ailleurs, l'huile séparée du mélange débouche dans l'enceinte de récupération d'huile puis est extraite en partie basse de ladite enceinte, au travers de la sortie d'huile.

L'invention concerne en outre un boîtier d'accessoires pour une turbomachine, comportant un carter logeant des moyens d'engrenage aptes à être entraînés par un arbre de la turbomachine et aptes à entraîner en rotation au moins un équipement, caractérisé en ce qu'il comporte un dispositif de séparation du type précité, caractérisé en ce que la turbine est située axialement d'un premier côté du carter du boîtier d'accessoires, la conduite de circulation d'air, l'enceinte de réception d'huile et l'élément filtrant étant situés axialement d'un second côté dudit carter, l'arbre d'entraînement en rotation dudit dispositif de séparation traversant axialement ledit carter.

L'arbre d'entraînement en rotation est supporté par ledit carter, par l'intermédiaire de paliers. Les paliers sont par exemple des paliers à roulement, tels que des roulements à billes ou à rouleaux.

Un tel agencement permet de profiter du carter du boîtier d'accessoires comme moyen de supportage, tout en ayant la liberté de placer le dispositif de séparation librement sur le carter, puisqu'il est indépendant de la chaîne cinématique du boîtier d'accessoires. Ceci permet de favoriser l'intégration du dispositif de séparation, notamment en réduisant la longueur des canalisations d'air et/ou d'huile par exemple.

Le carter peut présenter une partie en forme générale de cloche, refermée par un couvercle s'étendant radialement.

L'arbre d'entraînement en rotation du dispositif de séparation peut être dépourvu de moyens de couplage aux moyens d'engrenage du boîtier d'accessoires.

L'invention concerne de plus une turbomachine comportant un boîtier d'accessoires du type précité.

### Brève description des figures

[Fig. 1] représente une vue en coupe d'un dispositif de séparation d'un mélange air/huile équipant un boîtier d'accessoires, conformément à l'art antérieur,
[Fig. 2] est une vue en perspective et en coupe d'un carter de compresseur équipé d'un boîtier d'accessoires et d'un dispositif de séparation d'un mélange air/huile selon une forme de réalisation de l'invention,
[Fig. 3] est une vue correspondant à la figure 1, illustrant dispositif de séparation d'un mélange air/huile équipant un boîtier d'accessoires, conformément à l'invention,
[Fig. 4] est une vue en perspective du rotor de la turbine,
[Fig. 5] est une vue de côté du rotor de la turbine.

### Description détaillée de l'invention

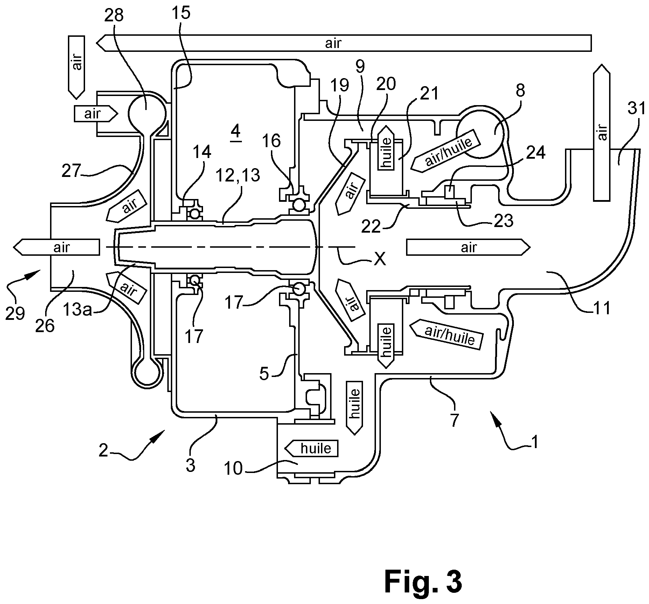

Les figures 2 et 3 représentent un dispositif 1 de séparation d'un mélange air/huile équipant un boîtier d'accessoires 2, conformément à une forme de réalisation de l'invention.

Le boîtier d'accessoires 2 comporte un carter fixe 3, fixé sur un carter de compresseur 25 et dans lequel sont logés des engrenages servant à distribuer la puissance aux différents accessoires.

Le dispositif de séparation du mélange air/huile est également appelé déshuileur.

Comme cela est mieux visible à la figure 3, le carter fixe 3 est creux et délimite un volume interne 4, refermé à l'arrière par un couvercle 5. Le carter 3 contient un ensemble d'engrenages formés par des pignons ou roues dentées (non visibles), destinés à distribuer la puissance prélevée sur l'arbre de la turbomachine jusqu'aux différents équipements de la turbomachine. Le boîtier d'accessoires 2 comporte un carter fixe 7, solidaire du couvercle 5, ledit carter 7 délimitant une entrée 8 de mélange huile/air en partie haute, une enceinte 9 de réception d'huile annulaire comportant une sortie d'huile 10 en partie basse, et une conduite ou un canal central de circulation d'air 11.

Les termes haut et bas sont définis par rapport à la gravité. La partie basse est ainsi la partie vers laquelle l'huile migre par gravité.

Le dispositif 1 comporte en outre un arbre tournant 12 d'axe X, comportant une partie avant 13 montée pivotante dans un logement 14 d'une cloison radiale 15 avant du carter 3 et dans une ouverture centrale 16 du couvercle 5, par l'intermédiaire de paliers à roulement 17. La partie avant 13 de l'arbre 12 est dépourvue de pignons dentés engrenant avec des pignons du boîtier d'accessoires.

La partie avant 13 de l'arbre 12 traverse axialement le carter 3 du boîtier d'accessoires 2 et débouche en avant de celui-ci.

L'avant est ainsi situé à gauche à la figure 3, l'arrière étant situé à droite sur cette figure.

Les termes axial et radial sont définis par rapport à l'axe X.

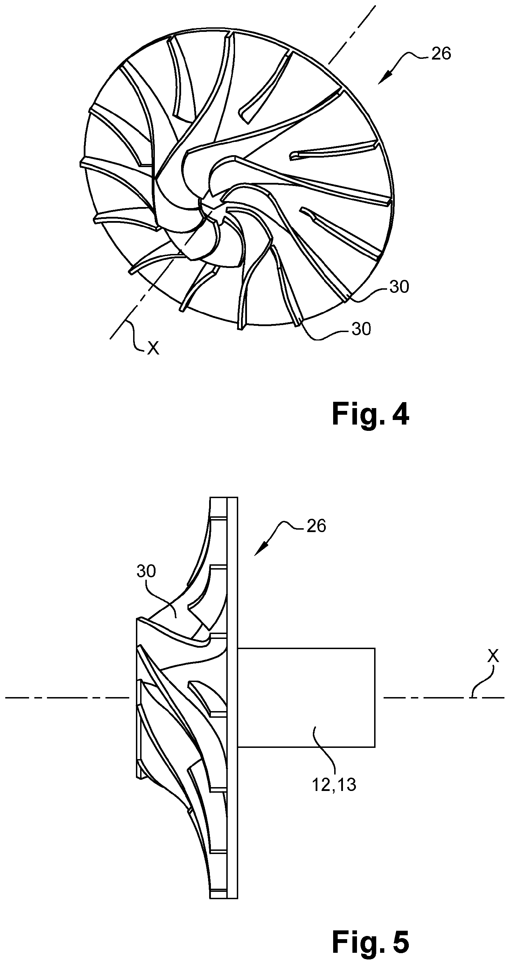

Un rotor de turbine 26 est monté et couplé en rotation à l'extrémité avant 13a de la partie avant 13 de l'arbre 12. Le rotor de turbine 26 est associé à un carter de turbine 27 de manière à former une turbine radiale comprenant une entrée d'air 28 dirigée radialement et située radialement à l'extérieur du rotor 26 et comprenant une sortie d'air 29 orientée selon l'axe X de rotation du rotor 26. Ledit rotor 26 comporte des ailettes 30 ou des pales dont la forme est mieux visible aux figures 4 et 5.

La sortie 31, c'est-à-dire l'extrémité arrière, du canal central de circulation d'air 11, est reliée à l'entrée d'air 28 de la turbine par l'intermédiaire d'une canalisation non représentée.

Ledit arbre 12 comporte en outre une partie arrière creuse 19, s'évasant vers l'arrière, comportant une partie annulaire interne 22. L'extrémité arrière de la partie 19 est couplée en rotation, par exemple par soudage, à une cassette 20 supportant des éléments filtrants 21. Les éléments filtrants 21 sont par exemple formés par des mousses métalliques, comme cela est notamment connu du document FR 3 064 305. La périphérie radialement interne de la cassette 20 est supportée par la partie interne 22, montée pivotante sur le carter 7, en particulier au niveau du canal central de circulation d'air 11, par l'intermédiaire de moyens d'étanchéité 23, 24.

En fonctionnement, un mélange d'air et d'huile est amenée dans le carter 7 par l'entrée 8, puis traverse les éléments filtrants 21 où l'huile est séparée de l'air et extraite radialement vers l'extérieur par effet centrifuge, avant de déboucher dans l'enceinte de réception d'huile 9 où grâce à la gravité elle est évacuée en partie basse par la sortie 10.

En particulier, les gouttes d'huile contenues dans le mélange air/huile sont captées par les éléments filtrants 21 et se déplacent vers la périphérie radialement externe de la cassette 20 du fait de la force centrifuge résultant de la mise en rotation de ladite cassette 20 supportant les éléments filtrants 21. Ensuite, les gouttes d'huile se dirigent par gravité vers la sortie 10.

L'air filtré ayant traversé les éléments filtrants 21 traverse le volume interne de la partie arrière creuse 19 de l'arbre 12, et pénètre dans le canal de circulation d'air 11 avant d'être dirigée vers l'entrée 28 de la turbine par l'intermédiaire de la canalisation précitée. Cet air entraîne alors le rotor de turbine 26, qui entraîne lui-même la rotation de l'arbre 12, des éléments filtrants 21, de la bague 20 et de la douille 22, autour de l'axe X, par rapport au carter 7 carter 3 et au couvercle 5.

En particulier, l'air pénètre radialement de l'extérieur vers l'intérieur dans la turbine. La forme des ailettes et plus généralement du rotor de turbine 26 permet de transformer l'énergie cinétique du flux d'air en un mouvement de rotation du rotor de turbine 26. Ce dernier étant couplé en rotation à l'arbre 12, la rotation du rotor de turbine 26 permet d'entraîner l'arbre 12 en rotation.

L'utilisation de l'air filtré pour alimenter la turbine permet de récupérer un maximum d'énergie afin d'améliorer le rendement de la turbomachine.

## Revendications

1. Dispositif de séparation (1) d'un flux issu d'un mélange air/huile comportant une entrée de flux (8), une enceinte (9) de réception d'huile, une conduite de circulation d'air (11), au moins un élément filtrant (21) couplé en rotation à un arbre d'entraînement en rotation (12) d'axe (X) longitudinal, le dispositif de séparation (1) étant conçu de façon à ce que le flux issu de l'entrée de flux (8) précitée débouche dans l'enceinte (9) et soit entrainé au travers de l'élément filtrant (21) entraîné en rotation, de sorte que l'huile contenue dans le flux soit centrifugée radialement à l'extérieur de l'élément filtrant (21) et amenée dans l'enceinte de réception d'huile (9), le flux filtré débouchant dans la conduite de circulation d'air (11), **caractérisé en ce que** l'arbre d'entraînement en rotation (12) est couplé à une turbine (26) entraînée en rotation par au moins une partie du flux filtré, la turbine (26) comprenant une sortie d'air (29) qui débouche vers l'extérieur.

2. Dispositif de séparation (1) selon la revendication 1, **caractérisée en ce que** la turbine (26) comporte une entrée d'air (28), la conduite de circulation d'air (11) comportant une sortie d'air (31), une canalisation reliant la conduite de circulation d'air (11) à l'entrée d'air (28) de la turbine (26) de façon à diriger le flux filtré à l'entrée d'air (28) de la turbine (26).

3. Dispositif de séparation (1) selon la revendication 2, **caractérisé en ce que** la turbine (26) est une turbine radiale, l'entrée d'air (28) de la turbine s'étendant radialement, la sortie d'air (29) de la turbine (26) s'étendant selon l'axe (X).

4. Dispositif de séparation (1) selon l'une des revendications 1 à 3, **caractérisé en ce qu'**il comporte un carter fixe (7), délimitant l'entrée du flux (8) et l'enceinte de réception d'huile (9), ledit carter (7) délimitant également la conduite de circulation d'air (11), l'arbre d'entraînement en rotation (12) comportant une première partie (13)pourvue d'une extrémité libre (13a) couplée en rotation à un rotor (26) de la turbine (28), et une seconde partie (19) opposée à la première partie (13) vis-à-vis de l'axe (X), la seconde partie (13) étant creuse et supportant l'élément filtrant (21) au niveau de sa périphérie radialement externe.

5. Dispositif de séparation (1) selon l'une des revendications 1 à 4, **caractérisé en ce qu'**un élément de support creux (22) est monté pivotant par rapport au carter (7), au niveau de la conduite de circulation d'air (11), ledit élément de support (22) supportant l'élément filtrant (21) au niveau de sa périphérie radialement interne.

6. Dispositif de séparation (1) selon l'une des revendications 1 à 5, **caractérisé en ce que** le carter fixe (7) comporte une sortie d'huile (10) située dans une partie inférieure de l'enceinte de réception d'huile (9).

7. Boîtier d'accessoires (2) pour une turbomachine, comportant un carter (3) logeant des moyens d'engrenage aptes à être entraînés par un arbre de la turbomachine et aptes à entraîner en rotation au moins un équipement, **caractérisé en ce qu'**il comporte un dispositif de séparation (1) selon l'une des revendications 1 à 6, **caractérisé en ce que** la turbine (26) est située axialement d'un premier côté du carter (3) du boîtier d'accessoires (2), la conduite de circulation d'air (11), l'enceinte de réception d'huile (9) et l'élément filtrant (21) étant situés axialement d'un second côté dudit carter (3), l'arbre d'entraînement en rotation (12) dudit dispositif de séparation (1) traversant axialement ledit carter (3).

8. Boîtier d'accessoires (2) selon la revendication 7, **caractérisé en ce que** l'arbre d'entraînement en rotation (12) est supporté par ledit carter (3), par l'intermédiaire de paliers (17).

9. Boîtier d'accessoires (2) selon la revendication 7 ou 8, **caractérisé en ce que** l'arbre d'entraînement en rotation (12) du dispositif de séparation (1) est dépourvu de moyens de couplage aux moyens d'engrenage du boîtier d'accessoires (2).

10. Turbomachine comportant un boîtier d'accessoires (2) selon l'une quelconque des revendications 7 à 9.

## Patentansprüche

1. Vorrichtung (1) zum Abscheiden einer Strömung, die aus einem Luft/Öl-Gemisch stammt, wobei diese einen Strömungseinlass (8), einen Ölaufnahmebehälter (9), eine Umluftleitung (11) und mindestens ein Filterelement (21) umfasst, das mit einer rotierenden Antriebswelle (12) einer Längsachse (X) drehbar gekoppelt ist, und die Abscheidevorrichtung (1) so ausgelegt ist, dass die aus dem vorgenannten Strömungseinlass (8) kommende Strömung in die Kammer (9) führt und über das in Rotation versetzte Filterelement (21) geführt wird, so dass das in der Strömung enthaltene Öl radial außerhalb des Filterelements (21) zentrifugiert und in den Ölaufnahmebehälter (9) geleitet wird, wobei die gefilterte Strömung in die Umluftleitung (11) führt, **dadurch gekennzeichnet, dass** die Drehantriebswelle (12) an eine Turbine (26) gekoppelt ist, die von mindestens einem Teil der gefilterten Strömung in Drehung versetzt wird, wobei die Turbine (26) einen nach außen führenden Luftauslass (29) umfasst.

2. Abscheidevorrichtung (1) nach Anspruch 1, **dadurch gekennzeichnet, dass** die Turbine (26) einen Lufteinlass (28) umfasst, wobei die Umluftleitung (11) einen Luftauslass (31) umfasst und ein Kanal die Umluftleitung (11) mit dem Lufteinlass (28) der Turbine (26) verbindet, um die gefilterte Strömung zum Lufteinlass (28) der Turbine (26) zu leiten.

3. Abscheidevorrichtung (1) nach Anspruch 2, **dadurch gekennzeichnet, dass** die Turbine (26) eine Radialturbine ist, wobei sich der Lufteinlass (28) der Turbine radial und der Luftauslass (29) der Turbine (26) entlang der Achse (X) erstreckt.

4. Abscheidevorrichtung (1) nach einem der Ansprüche 1 bis 3, **dadurch gekennzeichnet, dass** sie ein feststehendes Gehäuse (7) umfasst, das den Strömungseinlass (8) und den Ölaufnahmebehälter (9) abgrenzt, wobei das Gehäuse (7) auch die Umluftleitung (11) abgrenzt und die Drehantriebswelle (12) einen ersten Abschnitt (13) mit einem freien Ende (13a) umfasst, das drehbar an einen Rotor (26) der Turbine (28) gekoppelt ist, und einen zweiten Abschnitt (19), der dem ersten Abschnitt (13) in Bezug auf die Achse (X) gegenüberliegt, wobei der zweite Abschnitt (13) hohl ist und das Filterelement (21) an seinem radial äußeren Umfang stützt.

5. Trennvorrichtung (1) nach einem der Ansprüche 1 bis 4, **dadurch gekennzeichnet, dass** an der Umluftleitung (11) ein hohles Stützelement (22) relativ zum Gehäuse (7) schwenkbar montiert ist, wobei das Stützelement (22) das Filterelement (21) an seinem radial inneren Umfang abstützt.

6. Trennvorrichtung (1) nach einem der Ansprüche 1 bis 5, **dadurch gekennzeichnet, dass** das feststehende Gehäuse (7) einen Ölauslass (10) umfasst, der sich in einem unteren Teil des Ölaufnahmebehälters (9) befindet.

7. Hilfsgeräteantrieb (2) für eine Turbomaschine, mit einem Gehäuse (3), in dem Getriebemittel untergebracht sind, die von einer Welle der Turbomaschine angetrieben werden können und mindestens ein Gerät in Drehung versetzen können, **dadurch gekennzeichnet, dass** es eine Abscheidevorrichtung (1) nach einem der Ansprüche 1 bis 6 umfasst, **dadurch gekennzeichnet, dass** die Turbine (26) axial zu einer ersten Seite des Gehäuses (3) des Hilfsgeräteantriebs (2) angeordnet ist, wobei die Umluftleitung (11), der Ölaufnahmebehälter (9) und das Filterelement (21) axial zu einer zweiten Seite des Gehäuses (3) angeordnet sind und die Drehantriebswelle (12) der Abscheidevorrichtung (1) axial durch das Gehäuse (3) führt.

8. Hilfsgeräteantrieb (2) nach Anspruch 7, **dadurch gekennzeichnet, dass** die Drehantriebswelle (12) mithilfe von Lagern (17) über das Gehäuse (3) gestützt wird.

9. Hilfsgeräteantrieb (2) nach Anspruch 7 oder 8, **dadurch gekennzeichnet, dass** die Drehantriebswelle (12) der Trennvorrichtung (1) keine Mittel zum Ankuppeln an die Getriebemittel des Zubehörgehäuses (2) aufweist.

10. Turbomaschine mit einem Hilfsgeräteantrieb (2) nach einem der Ansprüche 7 bis 9.

## Claims

1. A device (1) for separating a flow from an air/oil mixture comprising a flow inlet (8), an oil receiving chamber (9), an air circulation duct (11), at least one filter element (21) rotatably coupled to a rotating drive shaft (12) with a longitudinal axis (X), the separation device (1) being designed in such a way that the flow from the above-mentioned flow inlet (8) opens into the chamber (9) and is driven through the rotating filter element (21), so that the oil contained in the flow is centrifuged radially outside the filter element (21) and fed into the oil receiving chamber (9), the filtered flow opening into the air flow line (11), **characterized in that** the rotating drive shaft (12) is coupled to a turbine (26) capable of being driven in rotation by at least part of the filtered flow, the turbine (26) comprising an air outlet (29) which opens out.

2. A separation device (1) according to claim 1, **characterized in that** the turbine (26) has an air inlet (28), the air circulation duct (11) having an air outlet (31), a duct connecting the air circulation duct (11) to the air inlet (28) of the turbine (26) so as to direct the flow filtered at the air inlet (28) of the turbine (26).

3. A separation device (1) according to claim 2, **characterized in that** the turbine (26) is a radial turbine, the air inlet (28) of the turbine extending radially, the air outlet (29) of the turbine (26) extending along the axis (X).

4. A separation device (1) according to one of claims 1 to 3, **characterized in that** it comprises a stationary casing (7), delimiting the flow inlet (8) and the oil receiving chamber (9), said casing (7) also delimiting the air flow line (11), the rotating drive shaft (12) comprising a first part (13) provided with a free end (13a) rotatably coupled to a rotor (26) of the turbine (28), and a second part (19) opposite the first part (13) to the axis (X), the second part (13) being hollow and supporting the filter element (21) at its radially outer periphery.

5. A separation device (1) according to one of claims 1 to 4, **characterized in that** a hollow support element (22) is pivotably mounted with respect to the casing (7) in the area of the airflow line (11), said support element (22) supporting the filter element (21) at its radially inner periphery.

6. A separation device (1) according to one of claims 1 to 5, **characterized in that** the stationary casing (7) has an oil outlet (10) located in a lower part of the oil receiving chamber (9).

7. An accessory box (2) for a turbomachine, comprising a casing (3) accommodating gear means capable of being driven by a shaft of the turbomachine and capable of rotating at least one piece of equipment, **characterized in that** it comprises a separation device (1) according to one of claims 1 to 6, **characterized in that** the turbine (26) is located axially on a first side of the casing (3) of the accessory box (2), the air flow line (11), the oil receiving chamber (9) and the filter element (21) being located axially on a second side of said casing (3), the rotating drive shaft (12) of said separating device (1) axially passing through said casing (3).

8. An accessory casing (2) according to claim 7, **characterized in that** the rotating drive shaft (12) is supported by said casing (3) via bearings (17).

9. An accessory casing (2) according to claim 7 or 8, **characterized in that** the rotating drive shaft (12) of the separating device (1) is devoid of coupling means to the gear means of the accessory box (2).

10. A method comprising an accessory box (2) according to any one of claims 7 to 9,
